# EUROPÄISCHE PATENTSCHRIFT

(11) **EP 2 024 648 B1**
(45) Veröffentlichungstag und Bekanntmachung des Hinweises auf die Patenterteilung: **22.09.2010**
(21) Anmeldenummer: 07724905.0
(22) Anmeldetag: 05.05.2007
(51) Int. Cl.: F15B 13/00

(54) **VENTILANORDNUNG**
VALVE ARRANGEMENT
AGENCEMENT DE SOUPAPE

(30) Priorität: 07.06.2006 DE 202006008921 U
(43) Veröffentlichungstag der Anmeldung: 18.02.2009
(73) Patentinhaber: FESTO AG & Co. KG, 73734 Esslingen (DE)
(72) Erfinder: HÖHN, Ralf, 70597 Stuttgart (DE); BOGDANOWICZ, Grzegorz, 73760 Ostfildern (DE)
(74) Vertreter: Abel, Martin
(86) Internationale Anmeldenummer: PCT/EP2007/003981
(87) Internationale Veröffentlichungsnummer: WO 2007/140851

(56) Entgegenhaltungen:
- EP-A2- 0 767 330
- DE-A1- 10 115 913
- US-B1- 6 192 937

## Beschreibung

Die Erfindung betrifft eine Ventilanordnung, mit einer Anschlussplatte, die mindestens eine Bestückungsfläche aufweist, die mehrere in einer Reihe nebeneinander angeordnete, zur Bestückung mit jeweils einem elektrisch betätigbaren Mehrwegeventil vorgesehene Bestückungsplätze definiert, wobei in der Anschlussplatte ein mit einer Druckquelle verbindbarer Anschlussplatten-Speisekanal und mindestens ein mit der Atmosphäre verbindbarer Anschlussplatten-Entlüftungskanal verlaufen, die jeweils zu jedem der Bestückungsplätze ausmünden, und wobei von jedem Bestückungsplatz mindestens ein die Anschlussplatte durchsetzender und mit einem Verbraucher verbindbarer individueller Anschlussplatten-Arbeitskanal ausgeht, dessen Fluidbeaufschlagung durch das am zugeordneten Bestückungsplatz montierte Mehrwegeventil steuerbar ist, und mit mindestens einem zur Montage an einem der Bestückungsplätze vorgesehenen Mehrwegeventil, das zumindest folgende fluidische Ventilanschlüsse aufweist:
- an seiner im montierten Zustand dem Bestückungsplatz zugewandten Grundfläche mindestens einen zur Verbindung mit je einem Anschlussplatten-Arbeitskanal vorgesehenen Ventil-Arbeitsanschluss, und
- an der Grundfläche einen zur Verbindung mit dem Anschlussplatten-Speisekanal vorgesehenen Ventil-Speiseanschluss und/oder an der Ventil-Anschlussfläche einen zur individuellen Fluideinspeisung verwendbaren Ventil-Speiseanschluss.

Bei beispielsweise aus der DE 4312729 A1 und der DE 4229054 C2 hervorgehenden Ventilanordnungen sitzen auf einer Anschlussplatte mehrere identisch ausgebildete Mehrwegeventile, deren Ventilkanäle ausnahmslos mit an der zur Montage dienenden Grundfläche vorgesehenen Ventilanschlüssen kommunizieren. Über diese Ventilanschlüsse stehen die Ventilkanäle mit in der Anschlussplatte verlaufenden Anschlussplattenkanälen in Verbindung, unter denen sich ein zur gemeinsamen Fluidversorgung dienender Anschlussplatten-Speisekanal sowie mehrere zur gemeinsamen Entlüftung dienende Anschlussplatten-Entlüftungskanäle befinden. Außerdem umfassen die Anschlussplattenkanäle paarweise von jedem Bestückungsplatz ausgehende individuelle Anschlussplatten-Arbeitskanäle, die seitlich an der Anschlussplatte ausmünden und dem Anschluss anzusteuernder Verbraucher dienen.

Die DE 69617158 T2, die DE 102004043979 A1 und die Patent Abstracts of Japan bezüglich JP 07-208627 A offenbaren jeweils eine Ventilanordnung, die mehrere Mehrwegeventile aufweist, die sowohl an der einer Anschlussplatte zugewandten Grundfläche als auch an einer entgegengesetzten Anschlussfläche über mehrere Arbeitsanschlüsse verfügen, die mit Verbrauchern verbindbar sind. An der Grundfläche der Mehrwegeventile finden sich außerdem noch Entlüftungsanschlüsse und Speiseanschlüsse. An der Anschlussfläche sind außer den Arbeitsanschlüssen keine weiteren Fluidanschlüsse vorhanden.

Die US 6,488,051 B2 und die EP 0493972 A2 offenbaren jeweils eine Ventilanordnung, bei der die Ventile unter Zwischenschaltung einer plattenförmigen Dichtung auf einer Anschlussplatte befestigt sind.

Bei einer aus der US-B1-6192937 bekannten Ventilanordnung der eingangs genannten Art weist ein Mehrwegeventil an einer zur Montage an einer Anschlussplatte dienenden Grundfläche einen Speiseanschluss, zwei Arbeitsanschlüsse und zwei zur Entlüftung der Arbeitsanschlüsse nutzbare Entlüftungsanschlüsse auf. Zur Betätigung dient ein Vorsteuerventil, dessen Abluft über zwei Abluftöffnungen ausströmt, die sich an der der Grundfläche abgewandten Oberseite des Mehrwegeventils befinden.

Mit solchen Ventilanordnungen können Ansteueraufgaben bezüglich der angeschlossenen Verbraucher in einem nur sehr engen Schema ausgeführt werden. Es ist daher die Aufgabe der vorliegenden Erfindung, Maßnahmen zu treffen, die einen flexibleren Betrieb der Ventilanordnung ermöglichen.

Zur Lösung dieser Aufgabe ist vorgesehen, dass das mindestens eine Mehrwegeventil an einer von der Grundfläche wegweisenden Ventil-Anschlussfläche mindestens einen zur Entlüftung des an den zugeordneten Anschlussplatten-Arbeitskanal angeschlossenen Verbrauchers nutzbaren Ventil-Entlüftungsanschluss aufweist, wobei der mindestens eine an der Ventil-Anschlussfläche vorhandene Ventil-Entlüftungsanschluss durch ein Verschlusselement dicht verschlossen ist, wenn an der Grundfläche mindestens ein mit dem am zugeordneten Bestückungsplatz ausmündenden Anschlussplatten-Entlüftungskanal verbundener weiterer Ventil-Entlüftungsanschluss vorhanden ist.

Auf diese Weise besteht die Möglichkeit, an der Bestückungsfläche der Anschlussplatte ein oder mehrere Mehrwegeventile zu installieren, deren fluidisches Anschlussmuster von demjenigen der konventionellen Mehrwegeventile abweicht. An der Grundfläche bleibt mindestens ein Ventil-Arbeitsanschluss beibehalten, sodass wie bei den konventionellen Mehrwegeventilen eine Kommunikation mit den in der Anschlussplatte verlaufenden Anschlussplatten-Arbeitskanälen gewährleistet ist.

Für die Fluideinspeisung kann entweder ein in konventioneller Weise an der Grundfläche vorgesehener Ventil-Speiseanschluss verwendet werden oder ein alternativ an einer nicht mit der Grundfläche übereinstimmenden Ventil-Anschlussfläche vorhandener Ventil-Speiseanschluss. Ist sowohl an der Grundfläche als auch an der Ventil-Anschlussfläche ein Ventil-Speiseanschluss vorhanden, kann der für die momentane Betriebsweise nicht benötigte Ventil-Speiseanschluss verschlossen werden. Ein an der Ventil-Anschlussfläche angeordneter Ventil-Speiseanschluss ermöglicht jedenfalls eine individuelle Fluidversorgung des betreffenden Mehrwegeventils unabhängig und getrennt von der über die Anschlussplatte vorgenommenen zentralen Fluidversorgung, sodass innerhalb ein und derselben Ventilanordnung mit unterschiedlichen Drücken gearbeitet werden kann. Auch ein selektiver Vakuumbetrieb ist auf diese Weise möglich.

Der mindestens eine an der Ventil-Anschlussfläche vorhandene Ventil-Entlüftungsanschluss gestattet eine individuelle Entlüftung des an das betreffende Mehrwegeventil angeschlossenen Verbrauchers und somit eine von der zentralen Entlüftung der Anschlussplatte unabhängige Entlüftung. Auf diese Weise wird eine gegenseitige Beeinflussung durch Staudruck ausgeschlossen, was beispielsweise für viele Anwendungen in der Prozesstechnik eine wichtige Voraussetzung ist. Der mindestens eine Ventil-Entlüftungsanschluss an der Ventil-Anschlussfläche kann aber auch für eine individuelle Abluftdrosselung verwendet werden, indem man hier eine Drosseleinrichtung anschließen kann, die die Ausströmrate des Fluides begrenzt.

Befinden sich an der Ventil-Anschlussfläche sowohl ein Ventil-Speiseanschluss als auch zwei Ventil-Entlüftungsanschlüsse, kann das Mehrwegeventil bei Bedarf in reversierender Betriebsweise eingesetzt werden, wobei dann über die beiden Ventil-Entlüftungsanschlüsse unter gleichem oder unter unterschiedlichem Druck stehendes Druckmedium eingespeist wird und die Entlüftung über den Ventil-Speiseanschluss stattfindet.

Zusätzlich zu den Ventil-Entlüftungsanschlüssen an der Ventil-Anschlussfläche können auch an der Grundfläche ein oder mehrere Ventil-Entlüftungsanschlüsse vorhanden sein. Sollen Letztere genutzt werden, werden in diesem Fall der oder die an der Ventil-Anschlussfläche vorhandenen Ventil-Entlüftungsanschlüsse verschlossen.

Vorteilhafte Weiterbildungen der Erfindung gehen aus den Unteransprüchen hervor.

In Abhängigkeit von der Funktionalität des Mehrwegeventils kann dieses über nur einen oder über zwei Ventil-Arbeitsanschlüsse verfügen und ferner auch über nur einen oder über zwei Ventil-Entlüftungsanschlüsse.

Die an der Ventil-Anschlussfläche vorhandenen Ventilanschlüsse sind zweckmäßigerweise mit Anschlussmitteln für Fluidleitungen oder sonstige fluidtechnische Komponenten ausgestattet. Diese Anschlussmittel können beispielsweise aus Innengewinden bestehen oder aus Steckanschlusseinheiten.

Zwischen der Grundfläche des Mehrwegeventils und dem zugeordneten Bestückungsplatz befindet sich zweckmäßigerweise eine einen Fluidaustritt zur Umgebung verhindernde, bevorzugt plattenförmige Dichtungseinrichtung. Diese ist so ausgebildet, dass sie die Mündungen der vom Mehrwegeventil nicht genutzten Anschlussplattenkanäle dicht verschließt. Die Dichtungseinrichtung ist bevorzugt austauschbar, um die Anschlussplattenkanäle für das betreffende Mehrwegeventil nach Bedarf nutzbar zu machen oder abzusperren. Zweckmäßigerweise werden mehrere unterschiedlich gestaltete Dichtungseinrichtungen zur Verfügung gestellt, die je nach Anwendungsfall ausgewählt verwendet werden.

Die Ventil-Anschlussfläche befindet sich zweckmäßigerweise an der der Grundfläche entgegengesetzten Seite des Mehrwegeventils.

An der Bestückungsfläche können gleichzeitig mehrere Mehrwegeventile mit voneinander abweichender Ausstattung an Ventilanschlüssen montiert sein, die zudem auch noch unabhängig voneinander in abweichender Weise betrieben werden können. Bei den Mehrwegeventilen kann es sich sowohl um direkt elektrisch betätigbare Ventile als auch, bevorzugt, um indirekt elektrisch betätigbare, das heißt um vorgesteuerte Ventile handeln.

Nachfolgend wird die Erfindung anhand der beiliegenden Zeichnung näher erläutert. In dieser zeigen:
- Figur 1: eine mögliche Ausführungsform der erfindungsgemäßen Ventilanordnung in perspektivischer, schematischer Darstellung, wobei der besseren Übersichtlichkeit wegen eines der Mehrwegeventile im von der An- schlussplatte abgehobenen Zustand gezeigt ist und drei Bestückungsplätze unbestückt abgebildet sind,
- Figur 2: einen Querschnitt durch die Ventilanordnung aus Fi- gur 1 gemäß Schnittlinie II-II,
- Figur 3: einen Querschnitt durch die Ventilanordnung aus Fi- gur 1 gemäß Schnittlinie III-III,
- Figur 4: einen Querschnitt durch die Ventilanordnung aus Fi- gur 1 gemäß Schnittlinie IV-IV und
- Figur 5: einen Querschnitt durch die Ventilanordnung aus Fi- gur 1 gemäß Schnittlinie V-V.

Die in ihrer Gesamtheit mit Bezugsziffer 1 bezeichnete Ventilanordnung enthält eine aus Metall oder Kunststoffmaterial bestehende Anschlussplatte 2, die an einer ihrer beiden großflächigen Seiten eine bevorzugt ebene Bestückungsfläche 3 für eine Vielzahl von Mehrwegeventilen 4 aufweist.

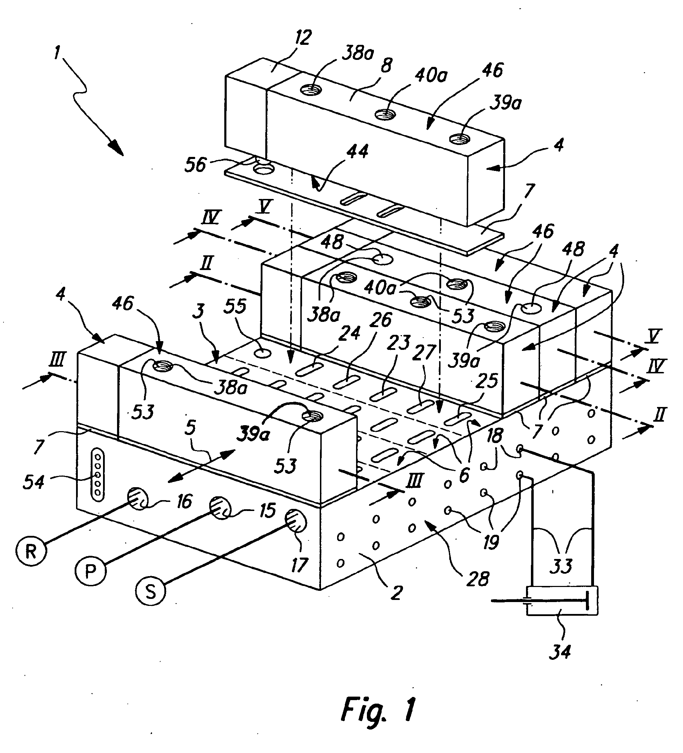

Die Bestückungsfläche 3 ist in mehrere in einer durch einen Doppelpfeil angedeuteten Aufreihungsrichtung 5 aufeinanderfolgende Bestückungsplätze 6 eingeteilt, deren Übergangsbereiche in Figur 1 gestrichelt angedeutet sind und die in der Regel flächenbündig ineinander übergehen. Die Bestückungsplätze 6 haben Längsgestalt mit zur Aufreihungsrichtung 5 rechtwinkeliger Längsachse.

Jeder Bestückungsplatz 6 ist zur Bestückung mit einem Mehrwegeventil 4 ausgebildet. Die daran montierten Mehrwegeventile 4 können über im Einzelnen nicht weiter gezeigte Befestigungsmittel lösbar an der Anschlussplatte 2 fixiert werden. Als Befestigungsmittel kommen beispielsweise Schraubverbindungsmittel und/oder Rastverbindungsmittel in Frage.

Bei der Ventilanordnung 1 des Ausführungsbeispiels definiert die Bestückungsfläche 3 insgesamt acht längsseits nebeneinanderliegende Bestückungsplätze 6 für je ein Mehrwegeventil 4. Vier Mehrwegeventile 4 sind im montierten Zustand gezeigt, eines im abgehobenen Zustand. Drei der Bestückungsplätze 6 sind unbestückt abgebildet.

Die Montage der Mehrwegeventile 4 an der Anschlussplatte 2 erfolgt jeweils unter Zwischenschaltung einer individuell zugeordneten, bevorzugt plattenförmigen Dichtungseinrichtung 7. Es handelt sich hier beispielsweise um eine Dichtungsplatte aus Elastomermaterial.

Die Anschlussplatte 2 ist beim Ausführungsbeispiel einstückig ausgebildet. Ein mehrteiliger Aufbau ist jedoch ebenfalls möglich. Beispielsweise kann sie sich aus mehreren in der Aufreihungsrichtung 5 lösbar aneinandergesetzten Plattenmodulen zusammensetzen, die jeweils einen oder mehrere der Bestückungsplätze 6 definieren.

Die Mehrwegeventile 4 sind von elektrisch betätigbarer Bauart. Sie beinhalten jeweils einen Steuerteil 8 und mindestens einen elektrisch aktivierbaren Antriebsteil 12. Im Gehäuse 13 des Steuerteils 8 ist mindestens ein strichpunktiert schematisch angedeutetes Ventilglied 14 untergebracht, das zwischen mehreren Schaltstellungen umschaltbar ist, die vom Aktivierungszustand des integrierten oder angebauten Antriebsteils 12 bestimmt werden.

Die Mehrwegeventile 4 des Ausführungsbeispiels sind indirekt elektrisch betätigbarer Art, es handelt sich also um vorgesteuerte Ventile. Der Antriebsteil 12 ist hier von einem oder mehreren elektrisch betätigbaren Vorsteuerventilen gebildet, die die Fluidbeaufschlagung des Ventilgliedes 14 steuern und dadurch dessen Schaltstellung vorgeben. Exemplarisch handelt es sich jeweils um 5/2-Wegeventile. Eine Bauform als 4/2-wegeventile wäre ebenfalls denkbar, außerdem in beiden Fällen eine Realisierung als 3-Stellungs-Ventile.

Anstelle als vorgesteuerte Ventile könnten die Mehrwegeventile 4 auch als direkt elektrisch betätigbare Ventile ausgebildet sein. Der elektrische und bevorzugt elektromagnetische Antriebsteil 12 würde in diesem Fall das Ventilglied 14 direkt mechanisch betätigen. Auf diese Art können insbesondere 3/2-Mehrwegeventile realisiert werden.

Der elektrische Antriebsteil 12 arbeitet bevorzugt nach einem elektromagnetischen Antriebsprinzip. Er könnte jedoch auch piezoelektrische und/oder elektrostatische oder dergleichen Antriebsmittel enthalten.

Wenn die Mehrwegeventile 4 an den Bestückungsplätzen 6 montiert sind, ergibt sich eine der Aufreihungsrichtung 5 folgende Ventilreihe, wobei die Mehrwegeventile 4 insbesondere so ausgerichtet sind, dass ihre Längsachsen rechtwinkelig zu der Aufreihungsrichtung 5 verlaufen.

Die Anschlussplatte 2 ist in der Aufreihungsrichtung 5 von einem Anschlussplatten-Speisekanal 15 durchsetzt. Parallel zu und mit Abstand neben dem Anschlussplatten-Speisekanal 15 erstrecken sich in der Anschlussplatte 2 zwei Anschlussplatten-Entlüftungskanäle 16, 17. Diese Anschlussplattenkanäle 15, 16, 17 münden jeweils zumindest einenends an geeigneter Stelle der Außenfläche der Anschlussplatte 2 aus, beim Ausführungsbeispiel an einer Stirnfläche. Dort können den Mündungen der Anschlussplattenkanäle 15, 16, 17 Anschlussmittel zugeordnet sein, die im Falle des Anschlussplatten-Speisekanals 15 den Anschluss einer Druckquelle P ermöglichen und im Falle der Anschlussplatten-Entlüftungskanäle 16, 17 den Anschluss von Schalldämpfern oder von zur gefassten Fluidabfuhr dienenden Fluidleitungen. Jedenfalls können die Anschlussplatten-Entlüftungskanäle 16, 17 auf diese Weise mit der Atmosphäre R, S verbunden werden.

Die Druckquelle P ist zweckmäßigerweise eine Druckluftquelle, um die Ventilanordnung 1 mit Druckluft betreiben zu können. Ein Betrieb mit hydraulischen Medien wäre jedoch ebenfalls denkbar.

Die Anschlussplattenkanäle 15, 16, 17 münden jeweils zu jeder Bestückungsfläche 3 aus. Die entsprechenden Mündungen seien im Folgenden als Anschlussplatten-Speiseanschluss 23 sowie als Anschlussplatten-Entlüftungsanschlüsse 24, 25 bezeichnet.

An jedem Bestückungsplatz 6 münden außerdem mit je einem Anschlussplatten-Arbeitsanschluss 26, 27 zwei jedem Bestückungsplatz 6 individuell zugeordnete Arbeitskanäle 18, 19, die andernends an einer externen Verbraucher-Anschlussfläche 28 der Anschlussplatte 2 ausmünden. An dieser Verbraucher-Anschlussfläche 28 sind den Kanalmündungen der Anschlussplatten-Arbeitskanäle 18, 19 geeignete Anschlussmittel 32 zugeordnet, die einen lösbaren Anschluss wegführender Fluidleitungen 33 ermöglichen, die zu anzusteuernden Verbrauchern 34 führen, von denen in Figur 1 einer schematisch angedeutet ist. Als Verbraucher 34 kommen beispielsweise fluidbetätigte Antriebe in Frage.

Die Fluidbeaufschlagung der Verbraucher 34 ist durch das am jeweiligen Bestückungsplatz 6 montierte Mehrwegeventil 4 steuerbar. Die aktuelle Position des durch das Antriebsteil 12 in der Steuerkammer 35 positionierbaren Ventilgliedes 14 bestimmt die aktuelle Verschaltung der Kanäle.

Die Verteilung der Anschlussplattenanschlüsse 23-27 innerhalb der Bestückungsplätze 6 ist bei allen Bestückungsplätzen 6 die gleiche. Mithin kann jedes Mehrwegeventil 4 wahlweise an jedem Bestückungsplatz 6 installiert werden.

Jedes Mehrwegeventil 4 ist von zwei Ventil-Arbeitskanälen durchsetzt, die einenends in eine dem Ventilglied 14 zugeordnete Steuerkammer 35 münden und andernends über einen Ventil-Arbeitsanschluss 36, 37 zu der dem Bestückungsplatz 6 zugewandten Grundfläche 44 des Mehrwegeventils 4 ausmünden. Die Ventil-Arbeitsanschlüsse 36, 37 liegen jeweils einem Anschlussplatten-Arbeitsanschluss 26, 27 gegenüber, sodass eine Verbindung zum zugeordneten Anschlussplatten-Arbeitskanal 18, 19 hergestellt ist. Eine Durchbrechung 45 in der Dichtungseinrichtung 7 ermöglicht jeweils einen ungehinderten Fluiddurchgang.

Sämtliche Mehrwegeventile 4 der Ventilanordnung 1 verfügen über die beschriebenen Ventil-Arbeitsanschlüsse 36, 37, die jeweils durch die Dichtungseinrichtung 7 hindurch mit einem individuellen Anschlussplatten-Arbeitskanal 18, 19 verbunden sind.

Mindestens ein und vorzugsweise mehrere der Mehrwegeventile 4 enthalten zwei Ventil-Entlüftungskanäle, die einenends mit der Steuerkammer 35 kommunizieren und andernends, über Ventil-Entlüftungsanschlüsse 38a, 39a, zu einer von der Grundfläche 44 wegweisenden Ventil-Anschlussfläche 46 an der Außenseite des betreffenden Mehrwegeventils 4 ausmünden. Die Ventil-Anschlussfläche 46 befindet sich zweckmäßigerweise an der der Grundfläche 44 entgegengesetzten und mithin von der Anschlussplatte 2 wegweisenden Außenfläche des Mehrwegeventils 4.

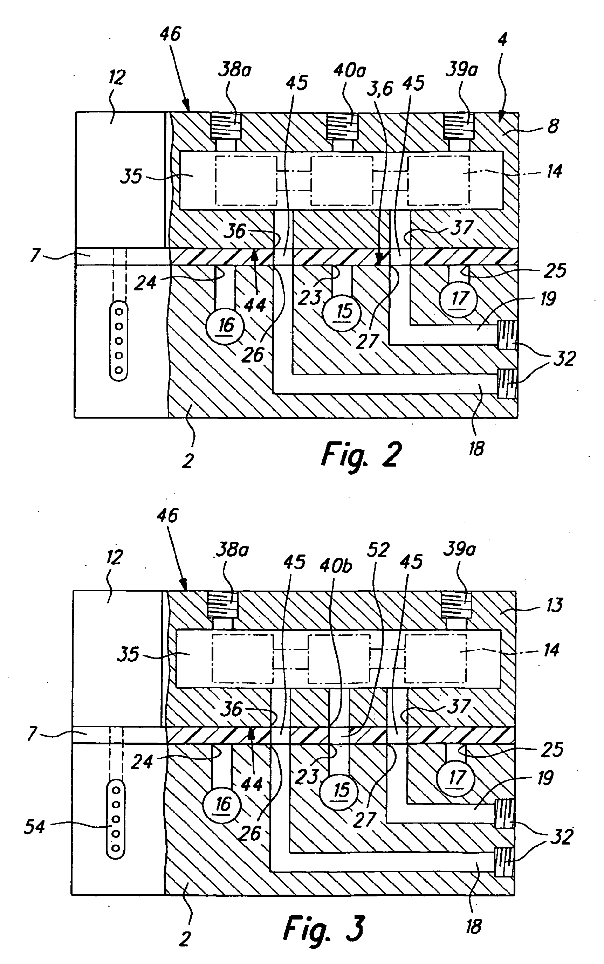

Derartige Ventil-Entlüftungsanschlüsse 38a, 39a sind bei den in Figuren 2 bis 4 illustrierten Mehrwegeventilen 4 vorhanden.

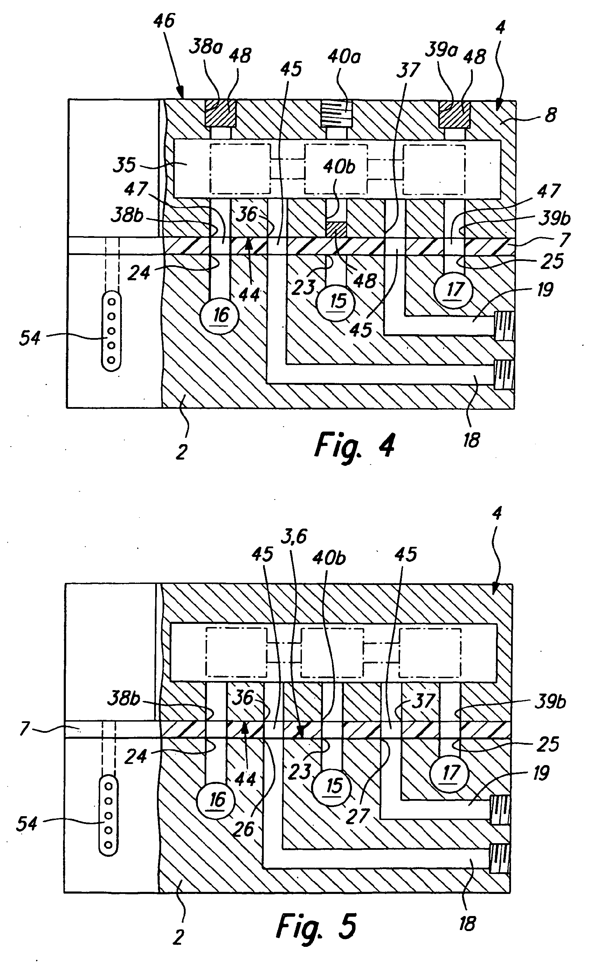

Eines oder mehrere der Mehrwegeventile 4 können an der Ventil-Anschlussfläche 46 außerdem einen Ventil-Speiseanschluss 40a aufweisen, der andernends ebenfalls zu der zugeordneten Steuerkammer 35 führt. Eine solche Ausstattung ist bei den in Figuren 2 und 4 gezeigten Mehrwegeventilen 4 vorhanden.

Zusätzlich oder anstelle eines an der Ventil-Anschlussfläche 46 angeordneten Ventil-Speiseanschlusses 40a kann an der Grundfläche 44 ein ebenfalls mit der zugeordneten Steuerkammer 35 kommunizierender Ventil-Speiseanschluss 40b vorhanden sein. Dies trifft für die Ausführungsformen der Figuren 3, 4 und 5 zu. Im Falle der Figuren 3 und 5 ist an der Ventil-Anschlussfläche 46 kein Ventil-Speiseanschluss 40a vorhanden. Beim Ausführungsbeispiel der Figur 4 sind beide Ventil-Speiseanschlüsse 40a, 40b vorgesehen.

Zusätzlich zu den an der Ventil-Anschlussfläche 46 ausgebildeten Ventil-Entlüftungsanschlüssen 38a, 39a können auch an der Grundfläche 44 Ventil-Entlüftungsanschlüsse 38b, 39b vorhanden sein, die jeweils mit der zugeordneten Steuerkammer 35 kommunizieren. Dies trifft für das in Figur 4 gezeigte Ausführungsbeispiel zu. Hier können wahlweise die an der Ventil-Anschlussfläche 46 befindlichen Ventil-Entlüftungsanschlüsse 38a, 39a oder die an der Grundfläche 44 befindlichen Ventil-Entlüftungsanschlüsse 38b, 39b zur Entlüftung des an das Mehrwegeventil 4 angeschlossenen Verbrauchers verwendet werden. Gezeigt ist die Verwendung der an der Grundfläche 44 vorhandenen Ventil-Entlüftungsanschlüsse 38b, 39b, die hier über Durchbrechungen 47 der Dichtungseinrichtung 7 mit den Anschlussplatten-Entlüftungsanschlüssen 24, 25 kommunizieren. Die nicht benötigten Ventil-Entlüftungsanschlüsse 38a, 39a an der Ventil-Verschlussfläche 46 sind durch Verschlusselemente 48 dicht verschlossen. Letztere können insbesondere stopfenartig ausgebildet sein. Zur Fixierung können sie in die Ventil-Entlüftungsanschlüsse 38b, 39b beispielsweise eingeschraubt oder eingepresst sein.

Bei der Anordnung gemäß Figur 2 befinden sich an der Grundfläche 44 lediglich die beiden Ventil-Arbeitsanschlüsse 36, 37. Die mithin nicht genutzten Anschlussplatten-Anschlüsse 23, 24, 25 sind hier durch die im gegenüberliegenden Bereich durchbrechungslos ausgebildete Dichtungseinrichtung 7 dicht abgeschlossen, sodass keine Druckluft austreten kann. Über den Ventil-Speiseanschluss 40a kann von einer fremden Druckquelle Druckluft eingespeist werden, die unter einem anderen Druck steht als das Druckmedium im Anschlussplatten-Speisekanal 15. Dadurch kann das betreffende Mehrwegeventil 4 mit einem anderen Druckniveau betrieben werden als die anderen Mehrwegeventile 4 der Ventilanordnung 1. Desgleichen ist eine individuelle Entlüftung über die Ventil-Entlüftungsanschlüsse 38a, 39a möglich, wobei hier bei Bedarf Schalldämpfer und/oder Drosseleinrichtungen anschließbar sind. Auch Leitungen zur gefassten Abluftabfuhr könnten hier angeschlossen werden.

Man hat auch die Möglichkeit, die beiden Ventil-Entlüftungsanschlüsse 38a, 38b der Ventil-Anschlussfläche 46 zur Einspeisung von Druckluft unterschiedlicher Druckniveaus zu nutzen und den ebenfalls an der Ventil-Anschlussfläche 46 befindlichen Ventil-Speiseanschluss 40a zur Entlüftung einzusetzen.

Das in Figur 3 illustrierte Mehrwegeventil 4 unterscheidet sich von demjenigen der Figur 2 dadurch, dass der einzige vorhandene Ventil-Speiseanschluss 40b an der Grundfläche 44 vorhanden ist und von dort aus über eine Durchbrechung 52 der Dichtungseinrichtung 7 mit dem Anschlussplatten-Speisekanal 15 kommuniziert. Die Druckversorgung geschieht hier also gemeinsam mit weiteren Mehrwegeventilen 4 aus der Anschlussplatte 2. Die Entlüftung ist weiterhin individuell über die an der Ventil-Anschlussfläche 46 vorhandenen zwei Ventil-Entlüftungsanschlüsse 38a, 39a möglich.

Bei dem in Figur 4 illustrierten Mehrwegeventil 4 wird wie in Figur 2 wiederum nur der an der Ventil-Anschlussfläche 46 ausmündende Ventil-Speiseanschluss 40a genutzt. Der an der Grundfläche 44 befindliche zweite Ventil-Speiseanschluss 40b hingegen ist dicht abgesperrt. Dies kann allein durch die Dichtungseinrichtung 7 geschehen, die in dem Bereich zwischen dem Ventil-Speiseanschluss 40b und dem gegenüberliegenden Anschlussplatten-Speiseanschluss 23 durchbrechungslos ausgebildet ist, da sie gleichzeitig auch den Anschlussplatten-Speisekanal 15 absperrt. Bei Bedarf kann in den Ventil-Speiseanschluss 40b jedoch zusätzlich auch noch ein Verschlusselement 48 eingesetzt sein, wie dies weiter oben anhand der Ventil-Entlüftungsanschlüsse 38a, 39a bereits erläutert wurde.

Somit wird deutlich, dass durch nach Bedarf platzierbare Verschlusselemente 48 Einfluss darauf genommen werden kann, welche der vorhandenen Ventilanschlüsse nutzbar sind oder nicht.

Zweckmäßigerweise sind den an der Ventil-Anschlussfläche 46 ausmündenden Ventilanschlüssen 38a, 39a, 40a geeignete Anschlussmittel 53 zugeordnet, um Fluidleitungen oder sonstige fluidtechnische Komponenten insbesondere lösbar anschließen zu können. Illustriert sind Ausführungsformen der Anschlussmittel 53 in Gestalt von Innengewinden in den Ventilanschlüssen. Andere Arten von Anschlussmitteln 53 könnten jedoch ebenfalls eingesetzt werden, beispielsweise Steckanschlusseinheiten.

Das Mehrwegeventil der Figur 4 ist unter Verwendung seines an der Ventil-Anschlussfläche 46 befindlichen Ventil-Speiseanschlusses 40a unabhängig von dem im Anschlussplatten-Speisekanal 15 herrschenden Druck individuell mit Druckmedium versorgbar, wobei es sich auch um Unterdruck handeln kann. Zur Entlüftung werden hier die standardmäßig in der Anschlussplatte 2 vorhandenen Anschlussplatten-Entlüftungskanäle 16, 17 eingesetzt.

Die Figur 5 zeigt ein konventionelles Mehrwegeventil 4, das in Kombination mit mindestens einem der eine Ventil-Anschlussfläche 46 aufweisenden anderen Mehrwegeventile 4 an der Anschlussplatte 2 installierbar ist. Bei dem Mehrwegeventil der Figur 5 sind ausschließlich an der Grundfläche 44 Ventilanschlüsse 36, 37, 38b, 39b, 40b vorhanden, die über zugeordnete Durchbrechungen der Dichtungseinrichtung 7 zuordnungsrichtig mit den Kanälen in der Anschlussplatte 2 verbunden sind.

Es versteht sich, dass eine beliebige Kombination unterschiedlich konfigurierter Mehrwegeventile 4 an der Anschlussplatte 2 installierbar ist. Auf diese Weise sind sehr individuelle Verschaltungen möglich.

Nicht dargestellt ist eine alternative Bauform, bei der in der Anschlussplatte 2 nur ein Ventil-Entlüftungskanal verläuft, sodass an den Bestückungsflächen 3 auch jeweils nur ein Ventil-Entlüftungsanschluss ausmündet.

Auch die Mehrwegeventile 4 können an ihrer Ventil-Anschlussfläche 46 mit nur einem Ventil-Entlüftungsanschluss ausgestattet sein.

Insbesondere bei einer Ausgestaltung der Mehrwegeventile 4 als 3/2-Wegeventile enthalten die Mehrwegeventile 4 nur einen Ventil-Arbeitsanschluss. In diesem Fall mündet am zugeordneten Bestückungsplatz 6 auch jeweils nur ein individueller Anschlussplatten-Arbeitskanal aus.

Bei 54 ist noch eine elektrische Anschlusseinrichtung 54 gezeigt, die die Anschlussplatte 2 in der Aufreihungsrichtung 5 durchsetzt und mit elektrischen Anschlussplatten-Anschlussmitteln 55 verbunden ist, die sich im Bereich jedes Bestückungsplatzes 6 an der Anschlussplatte 2 befinden. Komplementäre elektrische Ventil-Anschlussmittel 56 sind an jedem Mehrwegeventil 4, insbesondere im Bereich des Antriebsteils 12, vorhanden, die mit den zugeordneten elektrischen Anschlussplatten-Anschlussmitteln 55 kontaktiert sind, wenn das Mehrwegeventil 4 an der Anschlussplatte 2 installiert ist. Somit kann über die elektrische Anschlusseinrichtung 54 eine individuelle elektrische Ansteuerung der diversen Mehrwegeventile 4 stattfinden.

Alternativ besteht allerdings auch die Möglichkeit, die einzelnen Mehrwegeventile 4 über individuelle elektrische Ansteuerleitungen zu betreiben.

Was die Dichtungseinrichtungen 7 anbelangt, so stehen zweckmäßigerweise unterschiedliche Bauformen zur Verfügung, die selektiv eingesetzt werden, in Abhängigkeit vom verwendeten Mehrwegeventiltyp und der gewünschten Fluidverschaltung.Die Dichtungseinrichtungen 7 unterscheiden sich insbesondere in der Anordnung und/oder Verteilung ihrer Durchbrechungen 45, 47, 52. Durch einfaches Austauschen der Dichtungseinrichtungen 7 kann eine leichte Umrüstung stattfinden.

## Patentansprüche

1. Ventilanordnung, mit einer Anschlussplatte (2), die mindestens eine Bestückungsfläche (3) aufweist, die mehrere in einer Reihe nebeneinander angeordnete, zur Bestückung mit jeweils einem elektrisch betätigbaren Mehrwegeventil (4) vorgesehene Bestückungsplätze (6) definiert, wobei in der Anschlussplatte (2) ein mit einer Druckquelle verbindbarer Anschlussplatten-Speisekanal (15) und mindestens ein mit der Atmosphäre verbindbarer Anschlussplatten-Entlüftungskanal (16, 17) verlaufen, die jeweils zu jedem der Bestückungsplätze (6) ausmünden, und wobei von jedem Bestückungsplatz (6) mindestens ein die Anschlussplatte (2) durchsetzender und mit einem Verbraucher verbindbarer individueller Anschlussplatten-Arbeitskanal (18, 19) ausgeht, dessen Fluidbeaufschlagung durch das am zugeordneten Bestückungsplatz (6) montierte Mehrwegeventil (4) steuerbar ist, und mit mindestens einem zur Montage an einem der Bestückungsplätze (6) vorgesehenen Mehrwegeventil (4), das zumindest folgende fluidische Ventilanschlüsse aufweist:
- an seiner im montierten Zustand dem Bestückungsplatz (6) zugewandten Grundfläche (44) mindestens einen zur Verbindung mit je einem Anschlussplatten-Arbeitskanal (18, 19) vorgesehenen Ventil-Arbeitsanschluss (36, 37), und
- an der Grundfläche (44) einen zur Verbindung mit dem Anschlussplatten-Speisekanal (15) vorgesehenen Ventil-Speiseanschluss (40b) und/oder an der Ventil-Anschlussfläche (46) einen zur individuellen Fluideinspeisung verwendbaren Ventil-Speiseanschluss (40a), **dadurch gekennzeichnet, dass** das mindestens eine Mehrwegeventil(4) an einer von der Grundfläche (44) wegweisenden Ventil-Anschlussfläche (46) mindestens einen zur Entlüftung des an den zugeordneten Anschlussplatten-Arbeitskanal (18, 19) angeschlossenen Verbrauchers (34) nutzbaren Ventil-Entlüftungsanschluss (38a, 39a) aufweist, wobei der mindestens eine an der Ventil-Anschlussfläche (46) vorhandene Ventil-Entlüftungsanschluss (38a, 39a) durch ein Verschlusselement (48) dicht verschlossen ist, wenn an der Grundfläche (44) mindestens ein mit dem am zugeordneten Bestückungsplatz (6) ausmündenden Anschlussplatten-Entlüftungskanal (16, 17) verbundener weiterer Ventil-Entlüftungsanschluss (38b, 39b) vorhanden ist.

2. Ventilanordnung nach Anspruch 1, **dadurch gekennzeichnet, dass** an jedem Bestückungsplatz (6) zwei die Anschlussplatte (2) durchsetzende Anschlussplatten-Arbeitskanäle (18, 19) ausmünden, wobei das Mehrwegeventil (4) an seiner Grundfläche (44) zwei im montierten Zustand mit je einem der Anschlussplatten-Arbeitskanäle (18, 19) kommunizierende Ventil-Arbeitsanschlüsse aufweist.

3. Ventilanordnung nach Anspruch 1 oder 2, **dadurch gekennzeichnet, dass** an der Ventil-Anschlussfläche (46) zwei separate Ventil-Entlüftungsanschlüsse (24, 25) vorhanden sind.

4. Ventilanordnung nach einem der Ansprüche 1 bis 3, **dadurch gekennzeichnet, dass** an der Grundfläche (44) mindestens ein mit dem am zugeordneten Bestückungsplatz (6) ausmündenden Anschlussplatten-Entlüftungskanal (16, 17) verbundener weiterer Ventil-Entlüftungsanschluss (38b, 39b) vorhanden ist.

5. Ventilanordnung nach einem der Ansprüche 1 bis 4, **dadurch gekennzeichnet, dass** in Abhängigkeit von der gewünschten Betriebsweise des Mehrwegeventils (4) ein oder mehrere der Ventilanschlüsse mittels Verschlusselementen (48) dicht verschließbar oder verschlossen sind.

6. Ventilanordnung nach einem der Ansprüche 1 bis 5, **dadurch gekennzeichnet, dass** die an der Ventil-Anschlussfläche (46) vorhandenen Ventilanschlüsse (38a, 39a, 40a) mit Anschlussmitteln (53), beispielsweise in Form von Innengewinden oder Steckanschlusseinheiten, ausgestattet sind.

7. Ventilanordnung nach einem der Ansprüche 1 bis 6, **dadurch gekennzeichnet, dass** zwischen der Grundfläche (44) des Mehrwegeventils (4) und dem Bestückungsplatz (6) eine bevorzugt plattenförmige Dichtungseinrichtung (7) angeordnet ist, die die an dem Bestückungsplatz (6) vorhandenen Mündungen der vom Mehrwegeventil (4) nicht genutzten Anschlussplattenkanäle dicht verschließt.

8. Ventilanordnung nach einem der Ansprüche 1 bis 7, **dadurch gekennzeichnet, dass** die Ventil-Anschlussfläche (46) an der der Grundfläche (44) entgegengesetzten Seite des Mehrwegeventils (4) angeordnet ist.

9. Ventilanordnung nach einem der Ansprüche 1 bis 8, **dadurch gekennzeichnet, dass** an der Bestückungsfläche (3) gleichzeitig mehrere Mehrwegeventile (4) mit voneinander abweichender Ausstattung an Ventilanschlüssen montiert sind.

10. Ventilanordnung nach einem der Ansprüche 1 bis 9, **dadurch gekennzeichnet, dass** an mindestens einem Bestückungsplatz (6) ein Mehrwegeventil (4) montiert ist, dessen Ventilanschlüsse (36, 37, 38b, 39b, 40b) sich ausschließlich an der Grundfläche (44) befinden und das keine zusätzliche Ventil-Anschlussfläche (46) aufweist.

11. Ventilanordnung nach einem der Ansprüche 1 bis 10, **gekennzeichnet durch** eine Ausgestaltung der Mehrwegeventile als 3/2-, 4/2- oder 5/2-Wegeventile.

12. Ventilanordnung nach einem der Ansprüche 1 bis 11, **dadurch gekennzeichnet, dass** die Mehrwegeventile (4) als direkt oder indirekt elektrisch betätigbare Ventile ausgebildet sind.

## Claims

1. Valve assembly with a manifold (2) having at least one mounting surface (3) defining a plurality of mounting locations (6) arranged adjacent to one another in a row, each being designed for mounting an electrically operated multiway valve (4), wherein a manifold feed passage (15) connectable to a pressure source and at least one manifold vent passage (16, 17) connectable to the atmosphere, the passages terminating at each of the mounting locations (6), extend within the manifold (2), and wherein from each mounting location (6) there starts at least one individual manifold operating passage (18, 19) passing through the manifold (2) and connectable to a load, the fluid pressurisation of which is controllable by the multiway valve (4) mounted in the respective mounting location (6), and with at least one multiway valve (4) designed for mounting in one of the mounting locations (6) and having at least the following valve ports:
- on the base surface (44) which faces the mounting location (6) in the assembled state, at least one valve operating port (36, 37), each provided for connection to a manifold operating passage (18, 19), and
- on the base surface (44), a valve feed port (40b) provided for connection to the manifold feed port (15), and/or on the valve connecting surface (46), a valve feed port (40a) usable for individual fluid feed, **characterised in that** the at least one multiway valve (4) is provided on a valve connecting surface (46) facing away from the base surface (44) with at least one valve vent port (38a, 39a) usable for venting the load (34) connected to the respective manifold operating passage (18, 19), wherein the at least one valve vent port (38a, 39a) provided on the valve connecting surface (46) is tightly closed by a closing element (48) if at least one further valve vent port (38b, 39b) connected to the manifold vent passage (16, 17) terminating at the respective mounting location (6) is provided on the base surface (44).

2. Valve assembly according to claim 1, **characterised in that** two manifold operating passages (18, 19) passing through the manifold (2) terminate at each mounting location (6), wherein the multiway valve (4) is provided on its base surface (44) with two valve operating ports, each of which communicates with one of the manifold operating passages (18, 19) in the assembled state.

3. Valve assembly according to claim 1 or 2, **characterised in that** two separate valve vent ports (24, 25) are provided on the valve connecting surface (46).

4. Valve assembly according to any of claims 1 to 3, **characterised in that** at least one further valve vent port (38b, 39b) connected to the manifold vent port (16, 17) terminating at the respective mounting location (6) is provided on the base surface (44).

5. Valve assembly according to any of claims 1 to 4, **characterised in that**, depending on the desired operating mode of the multiway valve (4), one or more of the valve ports is/are tightly closable or closed by means of closing elements (48).

6. Valve assembly according to any of claims 1 to 5, **characterised in that** the valve ports (38a, 39a, 40a) provided on the valve connecting surface (46) are fitted with connecting means (53), for example in the form of female threads or plug-in fittings.

7. Valve assembly according to any of claims 1 to 6, **characterised in that** a preferably plate-shaped sealing device (7) tightly closing the terminations provided in the mounting location (6) for manifold passages not used by the multiway valve (4) is located between the base surface (44) of the multiway valve (4) and the mounting location (6),

8. Valve assembly according to any of claims 1 to 7, **characterised in that** the valve connecting surface (46) is located on the side of the multiway valve (4) which is opposite the base surface (44).

9. Valve assembly according to any of claims 1 to 8, **characterised in that** several multiway valves (4) fitted with different valve ports are mounted on the mounting surface (3) at the same time.

10. Valve assembly according to any of claims 1 to 9, **characterised in that** a multiway valve (4) having valve ports (36, 37, 38b, 39b, 40,) which are exclusively located on the base surface (44) and having no additional valve connecting surface (46) is mounted in at least one mounting location (6).

11. Valve assembly according to any of claims 1 to 10, **characterised by** the multiway valves being designed as 3/2-, 4/2- or 5/2-way valves.

12. Valve assembly according to any of claims 1 to 11, **characterised in that** the multiway valves (4) are designed as directly or indirectly electrically operated valves.

## Revendications

1. Agencement de vannes, avec une plaque de raccordement (2) qui présente au moins une surface de montage (3) qui définit plusieurs emplacements de montage (6) disposés en une rangée les uns à côté des autres et prévus pour monter à chaque fois une vanne multivoies (4) à commande électrique, dans lequel un canal d'alimentation (15) de plaque de raccordement pouvant être relié à une source de pression et au moins un canal de ventilation (16, 17) de plaque de raccordement pouvant être relié à l'atmosphère s'étendent dans la plaque de raccordement (2), canaux qui débouchent chacun vers chacun des emplacements de montage (6), et dans lequel au moins un canal de travail individuel (18, 19) de plaque de raccordement traversant la plaque de raccordement (2) et pouvant être relié à un consommateur part de chaque emplacement de montage (6), canal dont l'exposition à un fluide peut être commandée par la vanne multivoies (4) montée sur l'emplacement de montage (6) correspondant, et avec au moins une vanne multivoies (4) prévue pour un montage en l'un des emplacements de montage (6), qui présente au moins les raccordements hydrauliques de vanne suivants :
- sur sa surface de base (44) tournée vers l'emplacement de montage (6) à l'état monté, au moins un raccordement de travail de vanne (36, 37) prévu pour une jonction avec un canal de travail (18, 19) de plaque de raccordement respectif, et
- sur la surface de base (44), un raccordement d'alimentation de vanne (40b) prévu pour une jonction avec le canal d'alimentation (15) de plaque de raccordement et/ou, sur la surface de raccordement de vanne (46), un raccordement d'alimentation de vanne (40a) utilisable pour une alimentation individuelle en fluide, **caractérisé en ce que** la vanne multivoies (4) au nombre d'au moins un présente sur une surface de raccordement de vanne (46) opposée à la surface de base (44) au moins un raccordement de ventilation de vanne (38a, 39a) utilisable pour ventiler le consommateur (34) raccordé au canal de travail (18, 19) de plaque de raccordement correspondant, dans lequel le raccordement de ventilation de vanne (38a, 39a) au nombre d'au moins un présent sur la surface de raccordement de vanne (46) est fermé hermétiquement par un élément de fermeture (48) quand, sur la surface de base (44), au moins un autre raccordement de ventilation de vanne (38b, 39b) relié au canal de ventilation (16, 17) de plaque de raccordement débouchant dans l'emplacement de montage (6) correspondant est présent.

2. Agencement de vannes selon la revendication 1, **caractérisé en ce qu'**en chaque emplacement de montage (6) débouchent deux canaux de travail (18, 19) de plaque de raccordement traversant la plaque de raccordement (2), la vanne multivoies (4) présentant sur sa surface de base (44) deux raccordements de travail de vanne communiquant à l'état monté avec chacun l'un des canaux de travail (18, 19) de plaque de raccordement.

3. Agencement de vannes selon la revendication 1 ou 2, **caractérisé en ce que** sur la surface de raccordement de vanne (46) se trouvent deux raccordements de ventilation de vanne (24, 25) séparés.

4. Agencement de vannes selon l'une des revendications 1 à 3, **caractérisé en ce que** sur la plaque de base (44) se trouve au moins un autre canal de ventilation de vanne (38b, 39b) relié au canal de ventilation (16, 17) de plaque de raccordement débouchant dans l'emplacement de montage (6) correspondant.

5. Agencement de vannes selon l'une des revendications 1 à 4, **caractérisé en ce qu'**en fonction du mode de fonctionnement souhaité de la vanne multivoies (4), un ou plusieurs des raccordements de vanne peut être fermé ou est fermé hermétiquement au moyen d'éléments de fermeture (48).

6. Agencement de vannes selon l'une des revendications 1 à 5, **caractérisé en ce que** les raccordements de vanne (38a, 39a, 40a) présents sur la surface de raccordement de vanne (46) sont équipés de moyens de raccordement (53), par exemple sous la forme de filetages intérieurs ou d'unités de raccord à fiche.

7. Agencement de vannes selon l'une des revendications 1 à 6, **caractérisé en ce qu'**entre la surface de base (44) de la vanne multivoies (4) et l'emplacement de montage (6) s trouve un dispositif d'étanchéité (7) de préférence en forme de plaque, qui ferme hermétiquement les débouchés, présents à l'emplacement de montage (6), des canaux de plaque de raccordement non utilisés par la vanne multivoies (4).

8. Agencement de vannes selon l'une des revendications 1 à 7, **caractérisé en ce que** la surface de raccordement de vanne (46) est placée sur la face de la vanne multivoies (4) opposée à la surface de base (4).

9. Agencement de vannes selon l'une des revendications 1 à 8, **caractérisé en ce que** sur la surface de montage (3) sont montées simultanément plusieurs vannes multivoies (4) avec un équipement en raccordements de vanne variable de l'une à l'autre.

10. Agencement de vannes selon l'une des revendications 1 à 9, **caractérisé en ce qu'**en au moins un emplacement de montage (6) est montée une vanne multivoies (4) dont les raccordements de vanne (36, 37, 38b, 39b, 40b) se trouvent exclusivement sur la surface de base (44) et qui ne présente pas de surface de raccordement de vanne (46) supplémentaire.

11. Agencement de vannes selon l'une des revendications 1 à 10, **caractérisé par** la réalisation des vannes multivoies en vannes 3/2 voies, 4/2 voies ou 5/2 voies.

12. Agencement de vannes selon l'une des revendications 1 à 11, **caractérisé en ce que** les vannes multivoies (4) sont conformées en vannes à commande électrique directe ou indirecte.
